# EUROPEAN PATENT APPLICATION

(11) **EP 4 454 746 A1**
(43) Date of publication of application: **30.10.2024**
(21) Application number: 24172758.5
(22) Date of filing: 26.04.2024
(51) Int. Cl.: B01J 13/14, B01J 13/18

(54) **EXPANDED MICROSPHERES WITH EXCELLENT BARRIER PROPERTIES**

(30) Priority: 28.04.2023 EP 23170863
(71) Applicant: Nouryon Chemicals International B.V., 1101 BZ Amsterdam (NL)
(72) Inventor: JONSSON, Magnus, 1101 BZ Amsterdam (NL); EKMARKER, Anna, 1101 BZ Amsterdam (NL); KYRIAKIDOU, Despina, 1101 BZ Amsterdam (NL)
(74) Representative: LKGlobal UK Ltd.

(57) **Abstract**

The invention relates to thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, each based on the total weight of ethylenically unsaturated monomers, and wherein the thermoplastic thermally expandable microspheres comprise the propellant in an amount of 5 to 17 weight %, based on the total weight of the thermoplastic thermally expandable microspheres. The invention further relates to a process for preparing such thermoplastic thermally expandable microspheres and an aqueous slurry comprising such thermoplastic thermally expandable microspheres.

## Description

### Technical Field

The invention relates to thermoplastic thermally expandable microspheres and expanded microspheres with excellent barrier properties and thermal stability made from said thermoplastic thermally expandable microspheres. The invention further relates to a process for preparing such thermoplastic thermally expandable microspheres and an aqueous slurry comprising such thermoplastic thermally expandable microspheres.

### Background Art

Thermally expandable microspheres are known in the art, and are described for example in US3615972, WO 00/37547 and WO2007/091960. A number of examples are sold under the trade name Expancel^{®}. They can be expanded to form extremely low weight and low density fillers, and find use in applications such as foamed or low density resins, paints and coatings, cements, inks and crack fillers. Consumer products that often contain expandable microspheres include lightweight shoe soles (for example for running shoes), textured coverings such as wallpaper, solar reflective and insulating coatings, food packaging sealants, wine corks, artificial leather, foams for protective helmet liners, and automotive weather strips.

Thermally expandable polymer microspheres usually comprise a thermoplastic polymeric shell, with a hollow core comprising a propellant (or - as also often called - a blowing agent) which expands on heating. Examples of propellants include low boiling hydrocarbons or halogenated hydrocarbons, either condensed or liquid at room temperature, that vaporize on heating. To produce expanded microspheres, the expandable microspheres are heated, such that the thermoplastic polymeric shell softens, and the propellant vaporizes and expands, thus expanding the microsphere. Typically, the microsphere diameter can increase between 1.5 and 8 times during expansion. Expandable microspheres are marketed in various forms, e.g. as dry free-flowing particles, as aqueous slurry or as a partially dewatered wet cake. The heating of the expandable microspheres can be performed using various techniques. One commonly used technique is the so-called wet expansion technique wherein the microspheres are expanded in water which is heated up to boiling temperature. If higher temperatures for expansion are required, expansion can be performed using for instance high-energy steam techniques.

Expandable microspheres can be produced by polymerizing ethylenically unsaturated monomers in the presence of a propellant, for example using a suspension-polymerization process. Typical monomers include those based on acrylates, acrylonitriles, acrylamides, halogen-containing monomers, such as vinylidene chloride (VDC), and styrenes. Usually, mixtures of such monomers are used so to produce expandable microspheres with a co-polymer shell.

Expandable microspheres with a co-polymer shell based on either VDC and acrylonitrile (AN), or AN and methacrylonitrile (MAN), are often used in the production of wet thermally expandable microspheres. These microspheres are distinguished in that the polymer shell have excellent barrier properties towards the encapsulated propellant also in the wet state even though water can act as a plasticizer in the microsphere shell. If the polymer shell is plasticized, the propellant is lost through diffusion and the microsphere's properties deteriorates. This can be seen either already during the expansion in a water environment, or during storage of wet expanded thermally expandable microspheres.

Halogen-containing microspheres and in particular VDC-containing microspheres have been found to have excellent barrier properties due to crystalline polyvinylidene chloride (PVDC) moieties in the polymer shell, which also limits the plasticizing effect of water because of the hydrophobic nature of PVDC. Another benefit of these expandable VDC-containing microspheres is their expansion at relatively low temperatures due to the low glass transition temperature (Tg), i.e., the softening temperature of the polymer shell, which enables the expansion of these expandable VDC-containing microspheres in boiling water. However, major drawbacks with these microspheres are the high halogen content due to the PVDC which makes them far from sustainable. Furthermore, there are often health, safety, and environment (HSE)-concerns regarding these VDC-containing microspheres because of significant amounts of residual VDC since it is often difficult to polymerize to high conversions of VDC into PVDC.

There have been attempts to overcome these sustainability- and HSE-issues with a halogen free AN-co-MAN polymer shell. However, other challenges arise as these microspheres typically require temperatures above 150 °C for efficient expansion, so that boiling water cannot be used. Instead, steam is commonly used as the energy source during expansion. This makes the use of these microspheres less flexible as the demands on the expansion equipment is higher, and also brings about the HSE-issues in working with high energy steam. Moreover, it has been found that there are some drawbacks in particular as regards the storage stability of expanded microspheres made from such halogen-free expandable microspheres, such as for instance described in WO2007/091960 A1. In particular the storage stability of such halogen-free expandable microspheres which have been wet expanded and after expansion are stored in a wet state have been found to be not satisfying. Storage stability is a commercial highly relevant issue as for logistically and economically reasons customers tend to order larger batches of expanded microspheres which shall then be used over a certain time period, for instance over at least 3 weeks, preferably over at least 4 weeks and more preferably over at least 6 weeks. Also time for shipping expanded microspheres from the production site to a customer needs to be taken into account. Moreover, there are many applications of expanded microspheres where the expanded microspheres are not completely embedded in a stiff matrix. In such applications, long-term storage stability of the expanded microspheres is of high importance.

Wet storage of expanded microspheres is preferable as handling of wet microspheres is much easier than of completely dry microspheres which are a dusty powder. However, as already indicated above, water acts as a plasticizer for the polymeric shell and, hence, impairs the barrier properties of the polymeric shell leading to reduced storage stability.

Hence, there remains a need for thermoplastic thermally expandable microspheres which are essentially free from halogen-containing monomers, and in particularly essentially free from VDC, and which nonetheless have excellent barrier stability and very good storage stability after expansion. Moreover, it would be desirable if such thermoplastic thermally expandable microspheres can be expanded at lower temperatures, preferably by using water-based wet expansion. Particularly, it would be desirable to provide such thermally expandable microspheres which are essentially free from halogen-containing monomers, and in particularly essentially free from VDC, which can be wet expanded and which after wet expansion have excellent barrier stability and very good storage stability after expansion even when being stored in the wet state.

The present invention is, therefore, directed to finding such expandable polymeric microspheres the polymeric shell of which is essentially free from halogen-containing monomers and in particular essentially free from VDC, and which nonetheless have excellent barrier stability and good storage stability after expansion, and which preferably can be expanded at lower temperatures, such as by using water-based wet expansion, and which have the very good storage stability even if being stored in the wet state after wet expansion. Surprisingly, it has been found that these objects can be achieved by a specific combination of monomers for the polymeric shell of the expandable microspheres in specific amount ranges which is further combined with a particular amount range of propellant contained in the expandable microspheres.

### Summary of invention

In a first aspect, the present invention is directed to thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, each based on the total weight of ethylenically unsaturated monomers, and wherein the thermoplastic thermally expandable microspheres comprise the propellant in an amount of 5 to 17 weight %, based on the total weight of the thermoplastic thermally expandable microspheres.

In a second aspect, the present invention is further directed to a method for preparing thermoplastic thermally expandable microspheres comprising a polymer shell and a propellant, comprising polymerizing ethylenically unsaturated monomers in the presence of a propellant in a polymerization mixture, wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, each based on the total weight of ethylenically unsaturated monomers, and wherein the propellant comprises at least one of propane, isobutane, and n-butane and is present in an amount of 5 to 30 weight%, based on the total weight of the ethylenically unsaturated monomers and the propellant.

In a third aspect, the present invention is even further directed to an aqueous slurry comprising the above thermoplastic thermally expandable microspheres according to the first aspect or obtained from the above method according to the second aspect.

### Brief Description of Drawings

Figure 1 illustrates the difference between a single core (Figure 1A) and multi-core (Figure 1B) microsphere.
Figure 2 illustrates the storage stability of expanded microspheres from the examples over a time period of up to 42 days.

### Description of Embodiments

In a first aspect, the present invention discloses thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, each based on the total weight of ethylenically unsaturated monomers, and wherein the thermoplastic thermally expandable microspheres comprise the propellant in an amount of 5 to 17 weight %, based on the total weight of the thermoplastic thermally expandable microspheres.

The ethylenically unsaturated monomers preferably comprise acrylonitrile in an amount from 50 to 75 weight%, more preferably from 53 to 70 weight%, and most preferably from 55 to 65 weight %, such as from 57 to 61 weight%, each based on the total weight of ethylenically unsaturated monomers.

The ethylenically unsaturated monomers preferably comprise methacrylonitrile in an amount from 15 to 40 weight%, more preferably from 20 to 35 weight%, such as from 21 to 33 weight %, and most preferably from 22 to 30 weight%, such as from 23 to 28 weight%, each based on the total weight of ethylenically unsaturated monomers.

The ethylenically unsaturated monomers preferably comprise methyl acrylate and/or methyl methacrylate in an amount from 6 to 34 weight%, such as from 7 to 33 weight%, from 8 to 32 weight%, or from 10 to 30 weight%, preferably from 12 to 25 weight%, and most preferably from 13 to 23 weight%, such as from 14 to 20 weight%, each based on the total weight of ethylenically unsaturated monomers.

The total weight of the ethylenically unsaturated monomers for the polymeric shell of the thermoplastic thermally expandable microspheres amounts to 100 weight%.

Hence, according to a preferred embodiment, the polymer shell of the thermoplastic thermally expandable microspheres of the present invention is made from ethylenically unsaturated monomers comprising acrylonitrile in an amount from 50 to 75 weight%, methacrylonitrile in an amount of from 15 to 40 weight%, and methyl acrylate and/or methyl methacrylate in an amount of 10 to 30 weight%, each based on the total weight of ethylenically unsaturated monomers.

According to a more preferred embodiment, the polymer shell of the thermoplastic thermally expandable microspheres of the present invention is made from ethylenically unsaturated monomers comprising acrylonitrile in an amount from 53 to 70 weight%, methacrylonitrile in an amount of from 20 to 35 weight%, and methyl acrylate and/or methyl methacrylate in an amount of 12 to 25 weight%, each based on the total weight of ethylenically unsaturated monomers.

According to a an even more preferred embodiment, the polymer shell of the thermoplastic thermally expandable microspheres of the present invention is made from ethylenically unsaturated monomers comprising acrylonitrile in an amount from 55 to 65 weight %, methacrylonitrile in an amount of from 22 to 30 weight%, and methyl acrylate and/or methyl methacrylate in an amount of 13 to 23 weight%, each based on the total weight of ethylenically unsaturated monomers.

According to a particularly preferred embodiment, the polymer shell of the thermoplastic thermally expandable microspheres of the present invention is made from ethylenically unsaturated monomers comprising acrylonitrile in an amount from 57 to 61 weight %, methacrylonitrile in an amount of from 23 to 28 weight%, and methyl acrylate and/or methyl methacrylate in an amount of 14 to 20 weight%, each based on the total weight of ethylenically unsaturated monomers.

It has surprisingly been found that this specific combination of specific monomers and amount ranges thereof provides a polymer mix for a polymeric shell which is suitable to provide the desired properties of low expansion temperature and, at the same time, excellent barrier properties and good long term stability of expanded microspheres obtained from the expandable microspheres having a polymer shell comprising this specific polymer mixture.

In a further preferred embodiment, the polymer shell of the thermoplastic thermally expandable microspheres of the present invention is made from ethylenically unsaturated monomers comprising methyl acrylate in any of the amount ranges as specified above for the methyl acrylate and/or methyl methacrylate.

In an even further preferred embodiment, the ethylenically unsaturated monomers are substantially free from VDC. If included, the amount of VDC is less than 5 weight%, most preferably less than 2 weight% or even less than 1 weight% of the ethylenically unsaturated monomers, such as less than 0.5 weight% or even less than 0.1 weight% of the ethylenically unsaturated monomers. It is further preferred that the ethylenically unsaturated monomers are substantially free from any halogen containing monomers. If included, the amount of halogen containing monomers is preferably less than 5 weight%, most preferably less than 2 weight% or even less than 1 weight% of the ethylenically unsaturated monomers, such as less than 0.5 weight% or even less than 0.1 weight% of the ethylenically unsaturated monomers. In some embodiments, the ethylenically unsaturated monomers do not include any VDC and/or halogen containing monomers at all.

In a further preferred embodiment, the ethylenically unsaturated monomers comprises more methacrylonitrile than methyl acrylate and/or methyl methacrylate on a weight basis. Particularly preferred is that the ethylenically unsaturated monomers comprises more methacrylonitrile than methyl acrylate on a weight basis. For instance, the ethylenically unsaturated monomers comprises at least 1 weight% more, preferably at least 2 weight% more, more preferably at least 3 weight% more and most preferably at least 5 weight% more methacrylonitrile than methyl acrylate and/or methyl methacrylate on a weight basis It has been found that such weight excess of methacrylonitrile compared to methyl acrylate further improves the storage stability of the microspheres after expansion.

The ethylenically unsaturated monomers may comprise additional monomers, for instance in an amount up to 20 weight%, such as from 0 up to 15 weight% or from 0.1 to 12 weight%, preferably up to 10 weight% such as from 0.2 to 8 weight %, and more preferably up to 5 weight %, such as up to 2 weight%, each based on the total weight of ethylenically unsaturated monomers. Suitable additional monomers include for example (meth)acrylates; vinyl esters; styrenes such as styrene and α-methylstyrene; nitrile-containing monomers; (meth)acrylamides; vinyl ethers such as methyl vinyl ether, ethyl vinyl ether; N-substituted maleimides; dienes such as butadiene, isoprene and others; vinyl pyridine; and any combination thereof.

In a further embodiment the ethylenically unsaturated monomers may comprise a lactone according to formula (1) as an additional monomer: 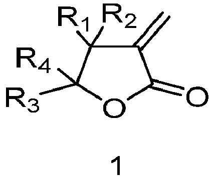 wherein each of R₁, R₂, R₃, R₄, separately from one another, is selected from the group consisting of H and an alkyl group. The alkyl group preferably contains 1-4 carbon atoms.

Particularly preferred alkyl groups are methyl and ethyl. More preferably, each of R₁, R₂, R₃, R₄, separately from one another, is selected from the group consisting of H and CH₃.

In preferred embodiments, R1, R₂, R₃, and R₄ in formula (1) are selected as follows:
R₁ = H, R₂ = H, R₃ = CH₃, R₄ = H (α-methylene-γ-valerolactone (MVL), same as γ-methyl-α-methylene-γ-butyrolactone),
R₁ = H, R₂ = H, R₃ = H, R₄ = H (α-methylene-γ-butyrolactone (MBL)),
R₁ = CH₃, R₂ = H, R₃ = H, R₄ = H (β-methyl-α-methylene-γ-butyrolactone (MMBL)), or
R₁ = H, R₂ = H, R₃ = CH3, R₄ = CH₃ (γ,γ-dimethyl-α-methylene-γ-butyrolactone).

If the ethylenically unsaturated monomers comprise a lactone according to formula (1), the lactone is most preferably either MVL or MBL.

In a further embodiment the ethylenically unsaturated monomers may comprise an itaconate dialkylester according to formula (2) as an additional monomer: 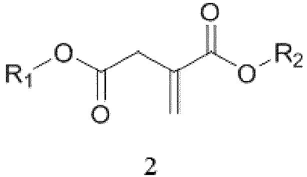 wherein each of R₁ and R₂, separately from one another, is an alkyl group preferably with 1-4 carbon atoms. Suitable alkyl groups include methyl, ethyl, n-propyl, isopropyl and butyl groups. Particularly, the itaconate dialkylester is preferably selected from the group consisting of dimethyl itaconate (DMI), diethyl itaconate (DEI), di(n-propyl) itaconate, diisopropyl itaconate, dibutyl itaconate (DBI).

In a further embodiment the ethylenically unsaturated monomers may comprise a monomer of Formula (3) as an additional monomer: 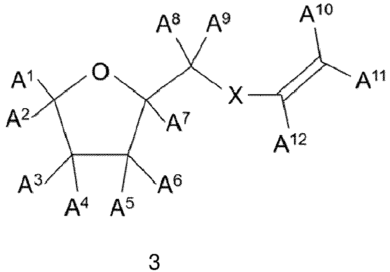 wherein each of A¹ to A¹² are independently selected from H and C₁ to C₄ alkyl, in which each C₁₋₄ alkyl group can optionally be substituted with one or more substituents selected from halogen, hydroxyl and C₁₋₄ alkoxy, , X is a linking group selected from -O-, -NR"-, -S-, -OC(O)-, -NR"C(O)-, -SC(O)-, -C(O)O-, -C(O)NR"-, and -C(O)S-, wherein the group C(O) represents a carbonyl group, C=O, R" is H or C₁₋₂ alkyl optionally substituted with one or more substituents selected from halogen and hydroxy. If the ethylenically unsaturated monomers comprise a monomer of Formula (3), in a preferred embodiment, A¹² is H. In another preferred embodiment A¹² is selected from C₁ to C₄ alkyl which can optionally be substituted with one or more substituents selected from halogen, hydroxy and C₁₋₄ alkoxy, and preferably is methyl. Most preferably, if the ethylenically unsaturated monomers comprise a monomer of Formula (3), the monomer of Formula (3) is tetrahydrofurfuryl (meth)acrylate or tetrahydrofurfuryl acrylate.

In a further preferred embodiment, the ethylenically unsaturated monomers comprise small amounts of one or more crosslinking multifunctional monomers, such as one or more of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3- butanediol di(meth)acrylate, neopentyl glycol di(meth)acrylate, 1,10-decanediol di(meth)acrylate, pentaerythritol tri(meth)acrylate, pentaerythritol tetra(meth)acrylate, dipentaerythritol hexa(meth)acrylate, triallylformal tri(meth)acrylate, allyl methacrylate, trimethylol propane tri(meth)acrylate, tributanediol di(meth)acrylate, PEG #200 di(meth)acrylate, PEG #400 di(meth)acrylate, PEG #600 di(meth)acrylate, 3- acryloyloxyglycol monoacrylate, triacryl formal, triallyl isocyanate, triallyl isocyanurate etc. Particularly preferred are crosslinking monomers that are at least tri-functional, examples of which include pentaerythritol tri(meth)acrylate, pentaerythritol tetra(meth)acrylate, dipentaerythritol hexa(meth)acrylate, triallylformal tri(meth)acrylate, trimethylol propane tri(meth)acrylate, triacryl formal, triallyl isocyanate and triallyl isocyanurate. The amounts of crosslinking functional monomers may, for example, be from 0.1 to 6 weight% or from 0.1 to 1 weight% or from 1 to 3 weight% of the ethylenically unsaturated monomers, 0.1 to 1 weight% being particularly preferred in case the one or more multifunctional monomers are at least tri-functional and 1 to 3 weight% being particularly preferred in case the one or more multifunctional monomers are di-functional. If ethylenically unsaturated monomers other than acrylonitrile, methacrylonitrile, methyl acrylate and/or methyl methacrylate and mixtures thereof, and one or more crosslinking multifunctional monomers, are included, the amount thereof is preferably from 0 to 6 weight%, most preferably from 0 to 5 weight%. Examples of such other kinds of monomers that may be included are nitrile containing monomers such as α-ethoxyacrylonitrile, fumaronitrile or crotonitrile; vinyl pyridine; vinyl esters such as vinyl acetate; styrenes such as styrene, halogenated styrenes or α-methyl styrene; dienes such as butadiene, isoprene and chloroprene; unsaturated carboxylic compounds like acrylic acid, methacrylic acid and salts thereof; or other unsaturated monomers like acrylamide, methacrylamide or N- substituted maleimides.

In some embodiments, the ethylenically unsaturated monomers used for preparing the thermoplastic thermally expandable microspheres of the present invention comprise less than 5 weight%, preferably less than 2 weight%, and even more preferably less than 1 weight% halogen-containing monomers, the weight% being based on the total weight of the ethylenically unsaturated monomers. In some embodiments, the ethylenically unsaturated monomers are substantially free of halogen-containing monomers.

In a further preferred embodiment, the ethylenically unsaturated monomers substantially consist of acrylonitrile, methacrylonitrile, methyl acrylate and/or methyl methacrylate and mixtures thereof, and optionally one or more crosslinking multifunctional monomers, each monomer in the respective amounts as specified above. In a particular embodiment, the ethylenically unsaturated monomers substantially consist of acrylonitrile, methacrylonitrile, methyl acrylate and/or methyl methacrylate and mixtures thereof, and one or more crosslinking multifunctional monomers, each monomer in the respective amounts as specified above. In a further particular embodiment, the ethylenically unsaturated monomers substantially consist of acrylonitrile, methacrylonitrile, methyl acrylate, and one or more crosslinking multifunctional monomers, each monomer in the respective amounts as specified above.

The thermoplastic thermally expandable microspheres are hollow, in which the shell comprises the polymer made from the above described ethylenically unsaturated monomers, and the hollow center or core comprises one or more propellant. In the expanded microspheres, the density is typically less than 1 g/cm³, and is suitably in the range of from 0.005 to 0.8 g/cm³, or from 0.01 to 0.6 g/cm³. In further embodiments, the density of the expanded microspheres is in the range of from 0.01 to 0.4 g/cm³. Higher densities, particularly densities of 1 g/cm³ or more, generally mean that the microsphere samples are not suitable for use.

The propellant is a hydrocarbon or mixture of hydrocarbons preferably having a boiling temperature not higher than the softening temperature of the thermoplastic polymer shell. The boiling point at atmospheric pressure is preferably within the range from -50 to 100 °C, most preferably from -20 to 50 °C, particularly most preferably from -20 to 30 °C. The propellant may consist substantially of at least one of methane, ethane, propane, isobutane, n-butane and neo-pentane, but may also additionally comprise one or more other hydrocarbons, for example in an amount from 0 to 50 weight% of the propellant. Examples of such hydrocarbons include, n-pentane, isopentane, cyclopentane, hexane, isohexane, neo-hexane, cyclohexane, heptane, isoheptane, octane and isooctane. Aside from them, other hydrocarbon types can also be used, such as petroleum ether, or chlorinated or fluorinated hydrocarbons, such as methyl chloride, methylene chloride, dichloroethane, dichloroethylene, trichloroethane, trichloroethylene, trichlorofluoromethane, perfluorinated hydrocarbons, fluorine containing ethers, etc. In a preferred embodiment, the propellant comprises at least one of propane, isobutane, and n-butane, alone or in a mixture with one or more other hydrocarbons. More preferred is that the propellant consists of at least one of propane, isobutane, and n-butane. Even more preferred is that the propellant comprises isobutane. Most preferably, the propellant consists of isobutane. The amount of isobutane in the propellant is preferably from 50 to 100 weight%, most preferably from 75 to 100 weight%, such as from 75 to 99 weight%.

The thermoplastic thermally expandable microspheres comprise the propellant in an amount of 5 to 17 weight %, based on the total weight of the thermoplastic thermally expandable microsphere. Preferably, the thermoplastic thermally expandable microspheres comprise the propellant in an amount of 7 to 16 weight%, such as from 9 to 15 weight%, and most preferably from 10 to 14 weight%, based on the total weight of the thermoplastic thermally expandable microspheres.

Surprisingly, it has been found that with such quite low amounts of propellant in the unexpanded expandable microspheres compared to the total weight of the thermoplastic thermally expandable microspheres in combination with the specific combination of ethylenically unsaturated monomers in the amounts as specified above for the microsphere shell, it is on the one hand possible to obtain microspheres after expansion which have excellent barrier properties and good storage stability and, which at the same time, are still expandable so to meet the commercial requests for expanded microspheres.

The determination of the weight of propellant in microspheres can be achieved by measuring the volatile content of the microspheres (i.e. the weight of volatiles, i.e. propellant, encapsulated in the microspheres). Hence, the terms "weight of propellant" or "weight percentage of propellant" as used herein in the context of microspheres are considered equivalent and are used interchangeably. The determination of the volatile content of microspheres is well-known by the skilled person and in principle any suitable method for determining the volatile content of microspheres can be used.

For instance, the propellant content of the microspheres can be determined using gas chromatography techniques. In such technique, microspheres are placed in a sealed gas-tight vial and heated to liberate the encapsulated propellant. A sample of the gas phase is introduced in the gas chromatograph in which the content of specified hydrocarbons is quantified.

In the present invention, the temperature at which the thermally expandable microspheres start to expand, Tₛₜₐᵣₜ, is not particularly limited. For instance, the thermally expandable microspheres may have a Tₛₜₐᵣₜ of from 50 °C to less than 150 °C. However, it is preferred that the microspheres can be expanded using an aqueous wet process. Hence, it is preferred that Tₛₜₐᵣₜ is from 60 to 120 °C, such as from 70 to 110 °C or from 80 to 105 °C. The temperature at which expansion starts is called Tₛₜₐᵣₜ, while the temperature at which maximum expansion is reached is called Tₘₐₓ. T_{Start} and T_{Max} may be determined using standard measuring techniques as commonly known by the skilled person. For instance, T_{Start} and T_{Max} can be determined in a temperature ramping experiment, by using for example a Mettler-Toledo Thermomechanical Analyser, such as Mettler-Toledo TMA/SDTA 841e, using a heating rate of 20 °C/min and a load (net.) of 0.06 N. In such a temperature ramping experiment, a sample of known weight of the thermally expandable microspheres is heated with a constant heating rate of 20 °C/min under a load (net.) of 0.06 N. When expansion of the thermally expandable microspheres starts, the volume of the sample increases and moves the load upwards. From such measurement, an expansion thermogram is obtained wherein the ordinate indicates the height of moving the load upwards and the abscissa indicates the temperature. Tₛₜₐᵣₜ and T_{Max} can be determined from this expansion thermogram for instance by using STARe software from Mettler-Toledo.

In a further preferred embodiment, the thermoplastic thermally expandable microspheres have an average mean particle size from 5 to 30 µm, preferably from 7 to 28 µm, more preferably from 8 to 25 µm, and most preferably from 10 to 20 µm. It has been found that when using the specific combination of monomers and amounts thereof for the polymer shell and the propellant amount, such quite low average mean particle size are particularly suitable to obtain expandable microspheres which readily expand, have excellent barrier properties, and after expansion have good storage stability.

In further embodiments, the polymer shell can comprise particles to improve the mechanical properties and gas barrier of the polymer shell, thus acting as polymer shell enhancers. Examples of such particles are talc, montmorillonite, nanocrystalline cellulose and various types of clay, such as bentonite.

Apart from the polymer shell and the propellant the microspheres may comprise further substances added during the production thereof, normally in an amount from 0 to 20 weight%, preferably from 1 to 10 weight%. Examples of such substances are solid suspending agents, such as one or more of starch, crosslinked polymers, gum agar, derivated cellulose like for example methyl cellulose, hydroxypropyl methylcellulose, hydroxyethyl cellulose and carboxy methylcellulose, silica, colloidal clays like for example chalk and bentonite, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminum, iron, zinc, nickel or manganese. If present, these solid suspending agents are normally mainly located to the outer surface of the polymer shell. However, even if a suspending agent has been added during the production of the microspheres, this may have been washed off at a later stage and could thus be substantially absent from the final product.

A number of factors can result in high densities. For example, high density can result from poor microsphere yield, i.e. the percentage of microspheres in the polymeric material is too low to reduce the overall density to an acceptable level. Another issue is poor expansion characteristics, which can arise where too many of the microspheres contain insufficient propellant to enable adequate expansion. This can result from the polymer shell being too permeable to the propellant, or due to the formation of so-called "multiple core" microspheres where, instead of a single propellant -containing core, there are multiple propellant -containing cores within the shell (e.g. like a microspherical foam or sponge). In such multi-core microspheres, the propellant concentration is typically too low to reduce the density adequately. Another cause is aggregation or agglomeration of the polymer, resulting in poor microsphere production and a denser material. Too high a proportion of aggregated material or poorly expanding microspheres can also lead to large inhomogeneity in the expansion characteristics of the resulting microsphere product. This is particularly unfavorable for surface-sensitive applications such as coatings, where a smooth finish is desirable.

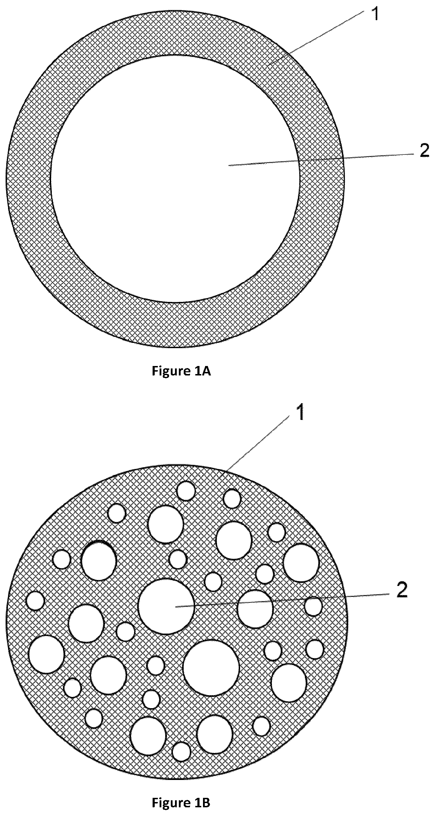

Illustrative cross sections of single core and multi-core microspheres are provided in Figures 1A and 1B respectively, where regions of polymer, 1, are represented by the cross-hatched areas, and propellant-containing regions, 2, are represented by blank areas.

In a second aspect, the present invention provides a process for preparing thermoplastic thermally expandable microspheres comprising a polymer shell and a propellant, comprising polymerizing ethylenically unsaturated monomers in the presence of a propellant in a polymerization mixture, wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, and wherein the propellant comprises at least one of propane, isobutane, and n-butane and is present in an amount of 5 to 30 weight%, based on the total weight of the ethylenically unsaturated monomers and the propellant. The method according to the second aspect of the present invention can be used to prepare the thermoplastic thermally expandable microspheres according to the first aspect of the present invention.

The process comprises polymerizing ethylenically unsaturated monomers as described above in a preferably aqueous suspension in the presence of a propellant as described above to yield microspheres comprising a polymer shell encapsulating said propellant. Regarding the kinds and amounts of monomers, as well as of any further additives already mentioned above, such as crosslinkers, etc., the above description of the expandable microspheres equally applies also to the process of this second aspect of the present invention.

In the process according to the second aspect of the invention, the propellant comprises at least one of propane, isobutane, and n-butane, for instance in an amount of from 50 to 100 weight% or from 50 to 99 weight% of the total propellant amount. In some embodiments, the propellant consists of propane, isobutane, n-butane, and mixtures thereof. In a preferred embodiment, the propellant comprises isobutane, for instance in an amount of from 50 to 100 weight% or from 50 to 99 weight% of the total propellant amount. In a particularly preferred embodiment, the propellant consists of isobutane.

In the process according to the second aspect of the invention, the propellant is present in the polymerization mixture in an amount of 5 to 30 weight%, such as 7 to 27 weight%, or 10 to 25 weight%, or 12 to 22 weight%, and preferably 15 to 20 weight%, based on the total weight of the ethylenically unsaturated monomers and the propellant.

In principle, any known general method for preparing expandable microspheres can be used. Suitable methods include for instance suspension polymerization. For instance, the process can follow the processes as described in US Patent 3615972 or WO 2019/043235 A1.

In an embodiment of the invention the microspheres are produced in a batchwise process and the polymerization may then be conducted as described below in a reaction vessel. For 100 parts by weight of monomer phase (suitably including monomers and propellant, the proportions of which determine proportions of monomers in the polymer shell and the amount of propellant in the final product), one or more polymerization initiator, preferably in an amount from 0.1 to 5 parts by weight, aqueous phase, preferably in an amount from 100 to 800 parts by weight, and one or more preferably solid colloidal suspending agent, preferably in an amount from 1 to 20 parts by weight, are mixed and homogenized. The size of the droplets of the monomer phase obtained determines the size of the final expandable microspheres. The temperature is suitably maintained from 40 to 90°C, preferably from 50 to 80°C, while the suitable pH depends on the suspending agent used. For example, a high pH, preferably from 5 to 12, most preferably from 6 to 10, is suitable if the suspending agent is selected from salts, oxides or hydroxides of metals like Ca, Mg, Ba, Zn, Ni and Mn, for example one or more of calcium phosphate, calcium carbonate, magnesium hydroxide, magnesium oxide, barium sulphate, calcium oxalate, and hydroxides of zinc, nickel or manganese. A low pH, preferably from 1 to 6, most preferably from 3 to 5, is suitable if the suspending agent is selected from starch, methyl cellulose, hydroxypropyl methylcellulose, hydroxypropyl methylcellulose, carboxy methylcellulose, gum agar, silica, colloidal clays, or oxide or hydroxide of aluminium or iron. Each one of the above agents has different optimal pH, depending on, for example, solubility data.

The suspending agent helps to stabilize droplets of the ethylenically unsaturated monomers containing organic phase in the aqueous phase, and in embodiments assists in the formation of an emulsion of the organic phase in the aqueous phase (i.e. an oil-in-water type emulsion).

The stabilization of the droplets or emulsion droplets is preferred for a number of reasons. Without stabilization, coalescence of the droplets containing the ethylenically unsaturated monomers and propellant may occur. Coalescence can have negative effects; such as nonuniform droplet size, poor yields of microspheres, and can also increase aggregation of the microspheres.

The suspending agent is typically present in an amount of 0 to 20 weight%, for example from 0.01 to 20 weight%, from 0.05 to 10 weight%, of from 0.1 to 5 weight% in the aqueous phase. In further embodiments, the suspending agent is present in an amount of from 0.1 to 1 weight% in the aqueous phase.

The choice of suspending agent is not particularly limited, and can be chosen from inorganic or organic suspending agents.

Examples of inorganic materials that can act as a suspending agent include silica, in particular colloidal silica, that can either be used in an unmodified "bare" form, or optionally can be surface modified to tailor its hydrophobic/hydrophilic characteristics, for example using organosilane-modified silica or colloidal silica.

In embodiments, an "organo" group in the organosilane can be selected from C₁₋₂₀ alkyl, C₁₋₂₀ alkenyl, C₅₋₆ aryl, and C₅₋₆ heteroaryl with one or more (e.g. 1 to 3) heteroatoms selected from O, S and N. Each of these groups can optionally be substituted with one or more groups selected from halide, hydroxy, epoxy, thiol, amino, C₁₋₂₀ alkylamino, di-C₁₋₂₀ alkylamino, hydroxyamino, hydroxy-C₁₋₂₀ alkylamino, (hydroxy-C₁₋₂₀ alky)(C₁₋₂₀ alkyl)amino, di(hydroxy-C₁₋₂₀ alkyl)amino C₁₋₂₀ alkoxy, C₁₋₂₀ amido, C₁₋₂₀ ureido, C₁₋₂₀ mercapto, C₃₋₂₀ epoxyalkoxy, C₁₋₂₀ alkylacrylate, ethylene glycol or oligomers thereof with 1 to 20 ethylene glycol groups, and propylene glycol or oligomers thereof with 1 to 20 propylene glycol groups. Any aliphatic groups can be linear, branched or cyclic.

The organosilane modified silica or colloidal silica can be produced by reacting silica (or colloidal silica) with an organosilane compound, typically having the formula RₙSiX₄₋ₙ, where R is one of the above-identified organic groups, X is a halide, hydroxy or C₁₋₆ alkoxy, and n is an integer in the range of from 1 to 3, typically 1 or 2.

Suitable silane compounds include tris-(trimethoxy)silane, octyl triethoxysilane, methyl triethoxysilane, methyl trimethoxysilane; gamma-mercaptopropyl trimethoxysilane, beta-(3,4-epoxycyclohexyl)-ethyl trimethoxysilane; silanes containing an epoxy group (epoxy silane), glycidoxy and/or a glycidoxypropyl group such as gamma-glycidoxypropyl trimethoxysilane, gamma-glycidoxypropyl methyldiethoxysilane, (3-glycidoxypropyl)trimethoxy silane, (3-glycidoxypropyl) hexyltrimethoxy silane, beta-(3,4-epoxycyclohexyl)-ethyltriethoxysilane; silanes containing a vinyl group such as vinyl triethoxysilane, vinyl trimethoxysilane, vinyl tris-(2-methoxyethoxy)silane, vinyl methyldimethoxysilane, vinyl triisopropoxysilane; gamma-methacryloxypropyl trimethoxysilane, gamma-methacryloxypropyl triisopropoxysilane, gamma-methacryloxypropyl triethoxysilane, octyltrimethyloxy silane, ethyltrimethoxy silane, propyltriethoxy silane, phenyltrimethoxy silane, 3-mercaptopropyltriethoxy silane, cyclohexyltrimethoxy silane, cyclohexyltriethoxy silane, dimethyldi ethyoxy silane, 3-chloropropyltriethoxy silane, 3-methacryoxypropyltrimethoxy silane, i-butyltriethoxy silane, trimethylethoxy silane, phenyldimethylethoxy silane, hexamethyldisiloxane, trimethylsilyl chloride, vinyltriethoxy silane, hexamethyldisilizane, and mixtures thereof. US4927749 discloses further suitable silanes which may be used.

Examples of silica that can be used include those sold under the Levasil^{™}, Bindzil^{™} and Ludox^{™} trade names, which are associated with colloidal silica. Solid forms of silica include fumed silica and precipitated silica can also be used, which can be dispersed in water to form a fine suspension. Sources of fumed silica include those sold under the trade names Cab-o-Sil^{™} and Aerosil^{™}.

Other inorganic suspending agents include colloidal clays (e.g. chalk and bentonite), and salts, oxides and hydroxides of Al, Ca, Mg, Ba, Fe, Zn, Ti, Ni and Mn (e.g. calcium phosphate, calcium carbonate, magnesium hydroxide, barium sulphate, calcium oxalate, titanium dioxide, and hydroxides of aluminium, iron, zinc, nickel or manganese).

When solid, inorganic suspending agents are used, they can produce so-called "Pickering" emulsions, where the solid inorganic particles are at the interface between the aqueous and organic phases.

One or more suspending agents can be used. Mixtures of organic and inorganic suspending agents can also be used.

In order to enhance the effect of the suspending agent, it is also possible to add small amounts of one or more promoters, for example from 0.001 to 1 weight%. Usually, such promoters are organic materials and may, for example, be selected from one or more of water-soluble sulfonated polystyrenes, alginates, carboxymethylcellulose, tetramethyl ammonium hydroxide or chloride or water-soluble complex resinous amine condensation products such as the water-soluble condensation products of diethanolamine and adipic acid, the water-soluble condensation products of ethylene oxide, urea and formaldehyde, polyethylenimine, polyvinylalcohol, polyvinylpyrrolidone, polyvinylamine, amphoteric materials such as proteinaceous, materials like gelatin, glue, casein, albumin, glutin and the like, non-ionic materials like methoxycellulose, ionic materials normally classed as suspending agents, such as soaps, alkyl sulfates and sulfonates and long chain quaternary ammonium compounds.

Conventional radical polymerization may be used and initiators are suitably selected from one or more of organic peroxides such as dialkyl peroxides, diacyl peroxides, peroxy esters, peroxy dicarbonates, or azo compounds. Suitable initiators include dicetyl peroxydicarbonate, di(4-tert-butylcyclohexyl) peroxydicarbonate, di(2-ethylhexyl) peroxydicarbonate, dioctanoyl peroxide, dibenzoyl peroxide, dilauroyl peroxide, didecanoyl peroxide, tert- butyl peracetate, tert-butyl perlaurate, tert-butyl perbenzoate, tert-butyl hydroperoxide, cumene hydroperoxide, cumene ethyl peroxide, diisopropylhydroxy dicarboxylate, 2,2'- azobis(2,4-dimethyl valeronitrile), 2,2'-azobis(isobutyronitrile), 1,1'-azobis(cyclohexane-1- carbonitrile), dimethyl 2,2<1>-azobis(2-methylpropionate), 2,2<1>-azobis[2-methyl-N-(2-hydroxyethyl)propionamide] and the like. It is also possible to initiate the polymerization with radiation, such as high energy ionising radiation.

If appropriate, the microspheres may at any stage be treated to reduce the amount of residual unreacted monomers, for example by any of the procedures described in WO 2004/072160 or US 4287308.

In a further aspect, the present invention is also directed to thermoplastic thermally expandable microspheres obtained by the method according to the second aspect of the present invention as described above.

In even a further aspect, the present invention is also directed to an aqueous slurry comprising expandable thermoplastic microspheres according to the first aspect of the present invention as described above or obtained by the method according to the second aspect of the present invention as described above, preferably in an amount from 5 to 55 weight%, most preferably from 20 to 55 weight%, based on the total weight of the slurry. Such a slurry is useful for various applications of the expandable microspheres, including e.g. paper making. The slurry preferably also comprises at least one thickener, preferably compatible with paper making. Examples of such thickeners include at least partially water soluble polymers selected from the group consisting of starch, gums, celluloses, chitins, chitosans, glycans, galactans, pectins, mannans, dextrins, co-polymers made from monomers comprising acrylic acid or salts thereof (preferably up to 50 mol%, most preferably up to 20 mol% acrylic acid or salt thereof), homo- and co-polymers made from monomers comprising esters or amides of acrylic acid, homo and co-polymers made from monomers comprising methacrylic acid, esters or amides thereof, rubber latexes, and copolymers, polyvinyl esters and co-polymers (e.g. with ethylene), polyvinyl alcohol, polyamines, polyetyleneimine, polyethylene/ polypropylene oxides, polyurethane, and aminoplast and phenoplast precondensates such as urea/ formaldehyde, urea/ melamine/ formaldehyde or phenol/ formaldehyde and polyamidoamine epichlorohydrin resins. Examples of suitable gums include guar gums, tamarind gums, locust bean gums, tare gums, karaya, okra, acacia, xanthan gums etc. and mixtures thereof, of which guar gums are particularly preferred. Examples of suitable celluloses include derivatives such as optionally chemically modified CMC (carboxymethyl cellulose) and cellulose ethers like EHEC (ethyl hydroxyethyl cellulose) and HEC (hydroxyethyl cellulose), and mixtures thereof. Chemically modified cellulose derivatives include, for example, those modified with various functional groups such as quaternary amines, other amines, sulphates, sulphonates, phosphates, phosphonates, polyethylene oxide and polypropylene oxide.

The at least partially water soluble polymer can be straight chained, branched or cross-linked. The average molecular weight can vary within wide limits, depending on the kind of polymer. In most cases the preferred average molecular weight is at least 500, more preferably at least 2000 and most preferably at least 5000. The upper limit is not critical and in most cases the average molecular weight is preferably up to 50 000 000, more preferably up to 10 000 000, most preferably up to 1 000 000.

Particularly preferred polymers include starch, CMC, EHEC, Guar gum, polyamidoamine epichlorohydrin resins, co-polymers of acrylic acid with other monomers (e.g. with acrylamide), and homo- or co-polymers of polyacrylamides, polyamine, polyvinyl alcohol and polyethylene/ polypropylene oxides.

One or more at least partially water soluble polymers effective as thickener are preferably present in an amount to stabilize the slurry against substantial sedimentation or flotation of the microspheres to an extent that they cannot be re-dispersed again. In many cases this can be achieved by adding sufficient polymer to obtain a preferred viscosity of the slurry from about 150 to about 1000 mPas at 25 °C, most preferably from about 200 to about 600 mPas at 25 °C (refers to measurement with an Anton Paar DV-1P viscosimeter equipped with a spindle L3). The amount required to stabilize the slurry depends on the polymer and other circumstances such as the pH. In many cases a preferred content of at least partially water soluble polymer in the slurry is from about 0.1 to about 15 weight%, most preferably from about 0.1 to about 10 weight%, particularly most preferably from about 0.5 to about 10 weight%.

### Examples

The following examples are intended to illustrate the invention.

The propellant content in the microspheres was determined using headspace gas chromatography (HS-GC) using an Agilent 7697A static headspace connected to an Agilent 7890B gas chromatograph. 8 to 10 mg of sample is placed in a sealed gas-tight vial and heated to 170 °C. A sample of the gas phase is introduced in the gas chromatograph equipped with a CP-Sil 19 cb column (length 30 m, inner diameter 0.32 mm, film thickness 1 µm, manufactured by Agilent) by a gas-tight syringe. Isooctane is used as the reference and evaluation is performed using the Chromeleon software from Thermo.

The expansion characteristics were evaluated using a Mettler TMA/SDTA 841e thermomechanical analyzer, interfaced with a PC running STARe software. The sample to be analyzed was prepared from 0.5 mg (+/- 0.02 mg) of the thermally expandable microspheres contained in an aluminum oxide crucible with a diameter of 6.8 mm and a depth of 4.0 mm. The crucible was sealed using an aluminum oxide lid with a diameter of 6.1 mm. Using a TMA Expansion Probe type, the temperature of the sample was increased from about 30 °C to 240 °C with a heating rate of 20 °C min⁻¹ while applying a load (net.) of 0.06 N with the probe. The displacement of the probe vertically was measured to analyze the expansion characteristics. Initial temperature of expansion (Tₛₜₐᵣₜ): the temperature (°C) when displacement of the probe is initiated. The maximum temperature of expansion (Tₘₐₓ) is the temperature (°C) when displacement of the probe reaches its maximum. The TMA density is the sample weight (d) divided by volume increase of the sample (dm³) when displacement of the probe reaches its maximum.

The particle size was determined by laser light scattering on a Malvern Mastersizer Hydro 2000 SM apparatus on wet samples. The mean particle size is presented as the volume median diameter d(0.5).

### Example 1:

Microspheres were prepared using the following procedure. A reaction mixture containing Mg(OH)₂₋stabilised organic droplets in water was created by mixing the phases and stirring vigorously until a suitable droplet size had been achieved. The water dispersion contained 1.8 parts by weight of Mg(OH)₂, 0.02 parts by weight of sodium 2-ethylhexyl sulfate and 283 parts by weight of water. The organic droplets contained 2.0 parts by weight of dilaurylperoxide, 22.0 parts by weight of isobutane, 55.0 parts by weight of acrylonitrile, 30.0 parts by weight of methacrylonitrile, 15.0 parts by weight of methyl acrylate and 0.3 parts by weight of trimethylolpropane trimethacrylate. Polymerization was performed at 62 °C in a sealed reactor under agitation. After cooling to room temperature a sample of the obtained microsphere slurry was removed, filtered, dewatered, and dried prior to analysis by TMA and headspace gas chromatography. The microspheres contained about 14 weight% isobutane, based on the total weight of the microspheres, and had a mean particle size of about 38 µm. The TMA-results can be found in Table 1 below.

### Example 2

A dispersion comprising 329 parts by weight of water, 22.7 parts by weight of 50 weight% surface-modified colloidal silica (Bindzil, 80 m²/g, particle size 32 nm surface-modified with 50 % propylsilyl / 50 % glycerolpropylsilyl) was prepared and maintained at a pH of about 4.5.

The aqueous dispersion was mixed with an organic phase that contained 1.6 parts by weight of dilaurylperoxide, 38.0 parts by weight of isobutane, 55.0 parts by weight of acrylonitrile, 30.0 parts by weight of methacrylonitrile, 15.0 parts by weight of methyl acrylate and 0.3 parts by weight of trimethylolpropane trimethacrylate. Polymerization was performed at 62 °C in a sealed reactor under agitation. After cooling to room temperature a sample of the obtained microsphere slurry was removed, filtered, dewatered, and dried prior to analysis by by TMA and headspace gas chromatography. The microspheres contained about 20 weight%, based on the total weight of the microspheres, isobutane and had a mean particle size of about 14 µm. The TMA-results ca be found in Table 1 below.

### Examples 3-7:

Further microspheres were prepared in additional polymerization examples which were performed in the same manner as in Example 2. However, in these further examples monomers, and propellant were used in the amounts as specified in Table 1 below. In Example 7 0.5 parts by weight of acetyl peroxydicarbonate were used as initiator. Analytical results can be found in Table 1.

**Table 1: Analytical results for Experiments 1-7 and amounts of different chemicals used**

| | Example | | | | | | |
|---|---|---|---|---|---|---|---|
| | 1 | 2* | 3 | 4 | 5* | 6 | 7* |
| AN | 55 | 55 | 60 | 65 | 65 | 60 | 52 |
| MAN | 30 | 30 | 25 | 10 | 15 | 25 | 28 |
| MA | 15 | 15 | 15 | 25 | 20 | 15 | 20 |
| IB** | 18 | 28 | 14 | 18 | 26 | 18 | 25 |
| Propellant [weight%]⁺ | 14 | 20 | 10 | 13 | 19 | 13 | 20 |
| Particle size [µm] | 38 | 14 | 19 | 14 | 15 | 7 | 13 |
| Tₛₜₐᵣₜ [°C] | 105 | 102 | 105 | 98 | 100 | 106 | 99 |
| Tₘₐₓ [°C] | 177 | 161 | 155 | 148 | 153 | 152 | 154 |
| TMA-density [g/L] | 5.7 | 7.3 | 14.2 | 14.6 | 8.7 | 15.1 | 7.9 |

| | | | | | | | |
|---|---|---|---|---|---|---|---|
| All amounts are expressed in parts per weight unless stated otherwise AN: acrylonitrile MAN: methacrylonitrile MA: methyl acrylate IB: isobutane * comparative example ** charged amount in weight% based on the total weight of monomer and propellant ⁺based on total weight of expanded microspheres | | | | | | | |

### Storage Stability Tests

Storage stability tests were performed as follows. Expanded microspheres were obtained from the expandable microsphere slurries obtained in Examples 1-7 by expansion in boiling water as for instance described in WO 2014/198532A1. The expanded microspheres were stored in sealed containers for at least 28 days at 40 °C. The initial amount of propellant contained in each expanded microsphere was determined after drying and set as 100 (%). Moreover, the amount of propellant contained in each expanded microspheres was determined after 1, 3, 7, 14, 28 and 42 days and the relative percentage of propellant content compared to the initial amount of propellant was calculated (in %). The results are shown in Table 2 below. As further comparative microspheres two commercially available microspheres were used, i.e. VDC-containing benchmark expanded microspheres Expancel 461 WE 40 (Comparative Example 8), and commercially available unexpanded VDC-free microspheres Expancel 051 DU 40 (Comparative Example 9) which were examined after wet expansion using the same procedures as for Examples 1-7.

**Table 2: Relative percentage of propellant content during storage stability test**

| Example | Relative percentage of propellant content | | | | | | |
|---|---|---|---|---|---|---|---|
| | time period [days] | | | | | | |
| | 0 | 1 | 3 | 7 | 14 | 28 | 42 |
| 1 | 100 | - | 100 | 100 | 100 | 96 | 96 |
| 2* | 100 | - | 92 | 82 | - | 74 | 61 |
| 3 | 100 | - | 100 | 91 | - | 88 | 83 |
| 4 | 100 | - | 96 | 92 | 87 | 79 | 69 |
| 5* | 100 | - | 93 | 83 | 82 | 71 | 60 |
| 6 | 100 | 98 | 99 | 93 | 86 | 83 | 72 |
| 7* | 100 | 91 | 82 | 72 | 47 | 30 | 28 |
| 8* | 100 | - | 95 | 88 | 88 | 81 | 75 |
| 9* | 100 | 92 | 75 | 58 | 39 | 20 | 14 |

| | | | | | | | |
|---|---|---|---|---|---|---|---|
| * comparative example - not determined | | | | | | | |

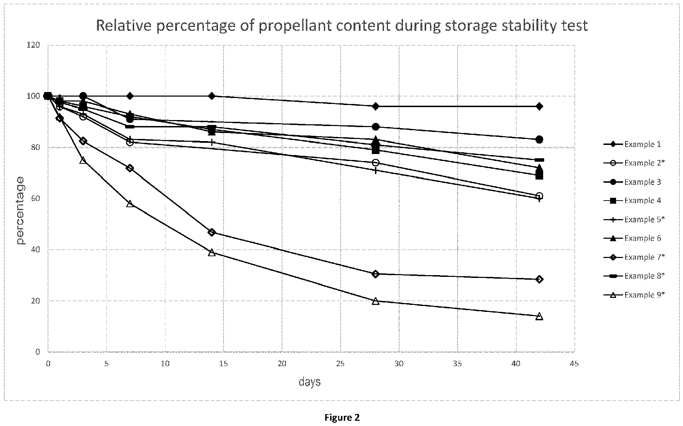

The results from Table 2 are illustrated in Figure 2. Figure 2 shows that the expanded microspheres obtained from the expandable microspheres according to the present invention (i.e. the microspheres from Examples 1, 3, 4, and 6) have improved storage stability properties, even when stored as wet microspheres, in particular already after at least 28 days of storage compared to other halogen-free expanded microspheres (i.e. the microspheres of comparative examples 2, 5, 7 and 9) and even have storage stability properties which come close or even outperform the storage stability properties of commercially available VDC-containing expanded microspheres (i.e. the microspheres of comparative example 8).

## Claims

1. Thermoplastic thermally expandable microspheres comprising a polymer shell and a propellant, wherein the polymer shell is made from ethylenically unsaturated monomers and encapsulates the propellant, and wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, each based on the total weight of ethylenically unsaturated monomers, and wherein the thermoplastic thermally expandable microspheres comprise the propellant in an amount of 5 to 17 weight %, based on the total weight of the thermoplastic thermally expandable microspheres.

2. The thermoplastic thermally expandable microspheres according to claim 1, wherein the ethylenically unsaturated monomers comprise acrylonitrile in an amount from 50 to 75 weight%, preferably from 53 to 70 weight%, and most preferably from 55 to 65 weight %, each based on the total weight of ethylenically unsaturated monomers.

3. The thermoplastic thermally expandable microspheres according to claim 1 or 2, wherein the ethylenically unsaturated monomers comprise methacrylonitrile in an amount from 15 to 40 weight%, preferably from 20 to 35 weight%, and most preferably from 22 to 30 weight% each based on the total weight of ethylenically unsaturated monomers.

4. The thermoplastic thermally expandable microspheres according to any of claims 1-3, wherein the ethylenically unsaturated monomers comprise methyl acrylate and/or methyl methacrylate in an amount from 6 to 34 weight%, such as from 7 to 33 weight%, from 8 to 32 weight%, or from 10 to 30 weight%, preferably from 12 to 25 weight%, and most preferably from 13 to 23 weight%, each based on the total weight of ethylenically unsaturated monomers.

5. The thermoplastic thermally expandable microspheres according to any of claims 1-4, wherein the ethylenically unsaturated monomers comprises more methacrylonitrile than methyl acrylate and/or methyl methacrylate on a weight basis, preferably at least 1 weight% more methacrylonitrile than methyl acrylate and/or methyl methacrylate on a weight basis, even more preferably at least 1 weight% more methacrylonitrile than methyl acrylate and/or methyl methacrylate on a weight basis.

6. The thermoplastic thermally expandable microspheres according to any of claims 1-5, wherein the thermoplastic thermally expandable microspheres comprise the propellant in an amount of 7 to 16 weight%, preferably from 9 to 15 weight%, and most preferably from 10 to 14 weight%, based on the total weight of the thermoplastic thermally expandable microspheres.

7. The thermoplastic thermally expandable microspheres according to any of claims 1-6, wherein the ethylenically unsaturated monomers comprise methyl acrylate.

8. The thermoplastic thermally expandable microspheres according to any of claims 1-7, wherein the ethylenically unsaturated monomers comprise less than 5 weight%, preferably less than 2 weight%, and even more preferably less than 1 weight% halogen-containing monomers.

9. The thermoplastic thermally expandable microspheres according to any of claims 1-8, wherein the propellant comprises at least one of propane, isobutane, and n-butane, preferably isobutane.

10. The thermoplastic thermally expandable microspheres according to any of claims 1-9, wherein the propellant comprises 50 to 100 weight% isobutane.

11. The thermoplastic thermally expandable microspheres according to any of claims 1-10, which have a mean particle size from 5 to 30 µm, preferably from 7 to 28 µm, more preferably from 8 to 25 µm, and most preferably from 10 to 20 µm.

12. The thermoplastic thermally expandable microspheres according to any of claims 1-11, wherein the ethylenically unsaturated monomers further comprises from 0.1 to 6.0 weight% of one or more crosslinkers, preferably from 0.2 to 1.0 weight%, each based on the total weight of ethylenically unsaturated monomers.

13. Process for preparing thermoplastic thermally expandable microspheres comprising a polymer shell and a propellant, comprising polymerizing ethylenically unsaturated monomers in the presence of a propellant in a polymerization mixture, wherein the ethylenically unsaturated monomers comprise acrylonitrile in an amount from 45 to 80 weight%, methacrylonitrile in an amount of from 10 to 45 weight%, and methyl acrylate and/or methyl methacrylate in an amount of 5 to 35 weight%, each based on the total weight of ethylenically unsaturated monomers, and wherein the propellant comprises at least one of propane, isobutane, and n-butane and is present in an amount of 5 to 30 weight%, based on the total weight of the ethylenically unsaturated monomers and the propellant.

14. The process of claim 13, wherein the polymerization mixture comprises inorganic particles, preferably magnesium hydroxide or colloidal silica, more preferably colloidal silica.

15. Aqueous slurry comprising the thermoplastic thermally expandable microspheres according to any of claims 1-12 or obtained from the method according to any of claims 13 and 14.
